# EUROPEAN PATENT SPECIFICATION

(11) **EP 3 021 199 B1**
(45) Date of publication and mention of the grant of the patent: **26.09.2018**
(21) Application number: 13889020.7
(22) Date of filing: 14.08.2013
(51) Int. Cl.: G06F 1/16, G06F 3/02

(54) **MEMBRANE SWITCH LEATHER CASE KEYBOARD**
MEMBRANSCHALTERTASTATUR IN EINEM LEDERETUI
CLAVIER À ÉTUI CUIR ET COMMUTATEUR TACTILE

(30) Priority: 12.07.2013 CN 201310292995; 12.07.2013 CN 201310292941
(43) Date of publication of application: 18.05.2016
(73) Proprietor: Shenzhen Hui Chuang Da Tech. Co., Ltd, Baoan District, Shenzhen, Guangdong 518000 (CN)
(72) Inventor: DING, Jinxin, Shenzhen, Guangdong 518000 (CN); CAO, Xiaopeng, Shenzhen, Guangdong 518000 (CN); LI, Ming, Shenzhen, Guangdong 518000 (CN)
(74) Representative: ZHAOffice SPRL
(86) International application number: PCT/CN2013/081424
(87) International publication number: WO 2015/003422

(56) References cited:
- EP-A1- 2 360 901
- CN-U- 202 372 931
- CN-Y- 201 022 058
- CN-Y- 201 278 323
- JP-A- 2013 101 802
- US-A1- 2009 190 990
- US-A1- 2013 088 431

## Description

### BACKGROUND

### Technical Field

The present invention discloses a case keyboard, in particular, to a case keyboard with thin film switches.

### Related Art

In the time when tablet PCs and ultrabooks are developing at a high speed, functions such as surfing the Internet, receiving and sending emails, reading e-books, and playing audios or videos are provided to people with lightness and convenience. However, a blemish in an otherwise perfect thing is that, since the portable apparatus such as the tablet PC, and the ultrabook is inconvenient in inputting, it generally lacks the capability of handling official business, which is the problem faced by the tablet PC.

Currently, regarding the problem of inconvenient input of the tablet PC, a Bluetooth keyboard is available on the market, which makes up the deficiency of the existing tablet PC through an external keyboard. However, the external keyboards available in the market all adopt conventional scissor keys (or referred to as X structure keys). The entire thickness of the scissor keyboard cannot be reduced due to the reason of its own structure, thus the thickness of the entire finished product is large, and it is not easy to carry. If an existing external keyboard uses the scissor keys, the advantages of being "light, thin, and easy to carry" of the tablet PC of the original design cannot be prominent. When the existing tablet PC requires an input mode, usually the tablet PC needs to tilt outwards by 45 degrees. In this way, the light on the screen of the tablet PC cannot illuminate on the keyboard. Therefore, the conventional keyboard is quite inconvenient without a backlight function for inputting at night or at a place where the light is dark. Moreover, the size of the keyboard becomes smaller as the size of the tablet PC is small, thus the keycaps are small too. It is difficult to input or it is easy to press the wrong key without being guided. Meanwhile, a touch keyboard is also developed on the current market. The type of keyboard can be light and thin; however, during usage, it lacks a sense of key travel due to the adopted touch structure. In other words, completely no hand feelings exist. During inputting, it feels like typing on a tablet; and when pressing a key, an operator is completely unaware of whether a function is input. Moreover, the area of the keyboard is small and the arrangement of the keys is very tight; therefore, a mistyping phenomenon would be easily caused during inputting.

In US 2013/088431 A1 a case keyboard according to the preamble of claim 1 is disclosed. JP2013-101802 describes a movable contact body with a light guide function. US2009/190990 describes a key pad with a light guiding plate.

### SUMMARY

Regarding the abovementioned Bluetooth external keyboard in the prior art, the entire thickness thereof is relatively large, while a touch keyboard has a disadvantage of lacking a sense of key travel. The present invention provides ultrathin metal domes and key portable case keyboard that can solve the abovementioned problems. The ultrathin metal dome portable case keyboard adopted by the present invention is a product obtained from a combination of the construction of a conventional functional key, with a currently best selling tablet PC protective sheath, and it has characteristics of being light, thin, and easy to carry, and having a Bluetooth function, a short stroke, and lower noises, etc.

The technical solution adopted by the present invention to solve the technical problem thereof is: a case keyboard with thin film switches, wherein the case keyboard includes a case, a tablet PC fixing frame and a keyboard main body; the tablet PC fixing frame is fixedly installed on a surface of the case; the keyboard main body is fixedly installed on the other surface of the case; the keyboard main body includes keys/keycaps, a fixing film/air hole layer, metal domes, an air slot layer, a conductive film/PCB and a key plate; and the key plate is disposed at the lowest layer and is fixedly installed on the case, the conductive film/PCB is disposed above the key plate, the air slot layer is disposed above the conductive film/PCB, the metal domes are disposed on the conductive film/PCB, and more than one metal dome is disposed corresponding to key configurations on the keyboard, the fixing film/air hole layer is disposed above the metal domes, and the keys/keycaps are disposed above the fixing film/air hole layer.

Furthermore a light guide film is disposed above the fixing film/air hole layer, light guide dots are disposed on the light guide film, an LED light source is disposed at a side surface of the light guide film, and the keys/keycaps are disposed above the light guide film and a plunger convex dot layer is disposed above the fixing film/air hole layer, and the light guide film is disposed above the plunger convex dot layer.

The technical solutions adopted by the present invention to solve the technical problem thereof further include:
A decorating part is disposed on the keys/keycaps, keycap holes are opened in the decorating part, and the keys/keycaps extend from the keycap holes to the external of the decorating part.

The light guide dots are convex dots or concave dots.

The light guide dots on the light guide film are disposed corresponding to the keys/keycaps.

The light guide film is adhered to the plunger convex dot layer via a first double sided adhesive or glue, and the fixing film/air hole layer is adhered to the plunger convex dot layer via a second double sided adhesive or glue.

Conductive substrate convex dots are disposed on the keycaps/keys.

Air holes are opened in the fixing film/air hole layer.

The air holes are disposed at an edge position of the metal dome
metal dome holes for mounting the metal domes 7 are disposed on the air slot layer, and adjacent two or three metal dome holes are communicated with each other via air slots.

One or more metal domes are disposed below each of the keys/keycaps.

The beneficial effects of the present invention are: the present invention adopts metal domes with a long life, a long stroke, high sensitivity, and a low pressing force as a basis for mechanic actions, so as to generate hand feelings when a hand presses a keycap. The gram force value of the metal domes adopted by the present invention is similar to that of conventional scissor keys, wherein the gram force value is between 30-200 gf, the pressing stroke of the keyboard is between 0.10 mm to 1.00 mm, and the sensitivity is between 25% and 85%. The present invention, regarding the light guide material of 0.10-0.50 mm optical level, uses a cold pressing manner or a hot pressing manner to manufacture light emitting spots of micro-nanostructure. By improving the structure, side light emitting LEDs are used as the light source, and through an optical design method, the key surface is enabled to emit light uniformly and softly and high luminance can be obtained. The breakover part of the key of the present invention adopts the PCB or conventional conductive film as a material for connecting electric appliance. The terminal, such as the key and the tablet PC, adopts a Bluetooth output control manner or wired connection manner. The keycap, the PCB or conductive film, the Bluetooth module, the metal domes and the like are then assembled as one module, to be installed inside a protective sheath, so as to form an integrated finished product of "an ultrathin metal dome portable case keyboard." The entire produce of the present invention is light, thin, simple and convenient for installation and detachment, has good hand feelings, is easy to carry, and has the function of protecting while providing an input function for the tablet PC and the like. The ultrathin metal dome portable case keyboard of the present invention would be a great innovation in the keyboard industry, and would bring a revolutionary reform to the conventional keyboard industry.

The present invention will be further explained by combining the accompany drawings and specific embodiments as follows.

### BRIEF DESCRIPTION OF THE DRAWINGS

FIG. 1 is an overall three-dimensional structural schematic diagram of the present invention.
FIG. 2 is an exploded state structural schematic diagram of the present invention.
FIG. 3 is a decorating part structural schematic diagram of the present invention.
FIG. 4 is a structural schematic diagram of keys and keycaps of the present invention.
FIG. 5 is a structural schematic diagram of LGF of the present invention.
FIG. 6 is a side structural schematic diagram of LGF of the present invention.
FIG. 7 is a structural schematic diagram of plunger (i.e., the conductive base) of the present invention.
FIG. 8 is a partially enlarged side structural schematic diagram of A in FIG. 7.
FIG. 9 is a structural schematic diagram of a fixing film (for fixing metal domes) of the present invention.
FIG. 10 is a structural schematic diagram of an air slot of the present invention.
FIG. 11 is a structural schematic diagram of the metal domes of the present invention.
FIG. 12 is a structural schematic diagram of A Bluetooth and battery cap of the present invention.
FIG. 13 is a structural schematic diagram of positions of a Bluetooth module and a battery of the present invention.
FIG. 14 is a structural schematic diagram of a first embodiment of PCB or a conductive film (line) of the present invention.
FIG. 15 is a structural schematic diagram of a second embodiment of PCB or a conductive film (line) of the present invention.
FIG. 16 is a structural schematic diagram of a key plate of the present invention.
FIG. 17 is a structural schematic diagram of a three-dimensional state of the present invention.
FIG. 18 is a structural schematic diagram of three-dimensional state in another angle of view of the present invention.
FIG. 19 is a front structural schematic diagram of the present invention.
FIG. 20 is a side structural schematic diagram of the present invention.

In the drawings, 1 - a decorating part, 2 - keys and keycaps, 3 - a double sided adhesive or glue, 4 - a plunger convex dot (conductive base) layer, 5 - a double sided adhesive or glue, 6 - a fixing film/air hole layer, 7 - metal domes (dome), 8 - an air slot layer, 9 - a conductive film or PCB, 10 - a key plate, 11 - a Bluetooth module, 12 - a rotating part or a rotating shaft, 13 - a tablet PC fixing frame, 14 - a power source, 15 - a connector, 16 - a case, 17 - threaded holes for the decorating part, 18 - a double sided adhesive tape or glue for the decorating part, 19 - keycap holes, 20 - conductive substrate convex dots, 21 - a positioning column, 22 - a conductive substrate carrier, 23 - plunger, 24 - air holes, 25 - metal dome holes, 26 - an air slot, 27 - A Bluetooth and battery cap, 28 - screws, 29 - a double sided adhesive for a cover plate, 30 - a battery, 31 - a Bluetooth chip, 32 - a USB interface, 33 - a switch, 34 - a conductive film, 35 - a pin, 36 - a switch line, 37 - a golden finger, 38 - a light guide film, 39 - a second PCB/FPC, 40 - an LED light source, 41 - light guide dots, and 42 - a light guide double sided adhesive or glue.

### DETAILED DESCRIPTION

The present embodiment is a preferable embodiment of the present invention, and other embodiments with principles and basic structures same as or similar to those of the present embodiment all fall within the scope of protection of the present invention.

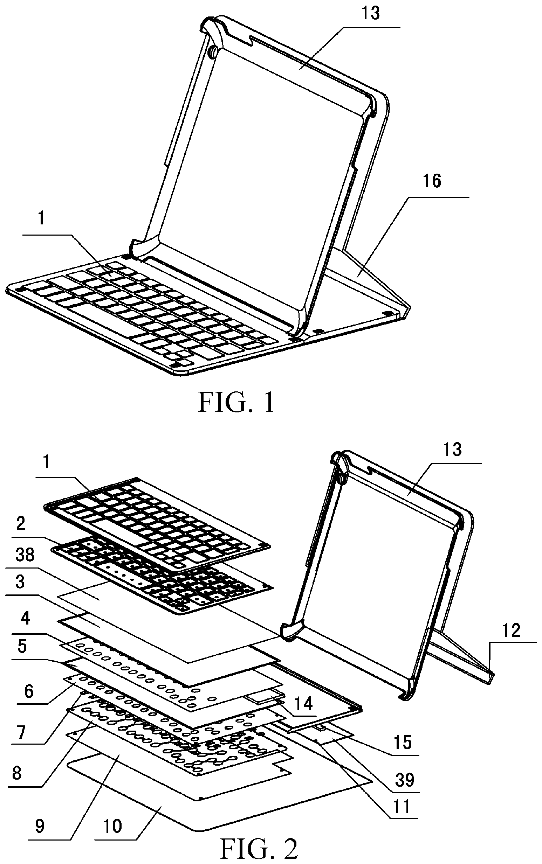

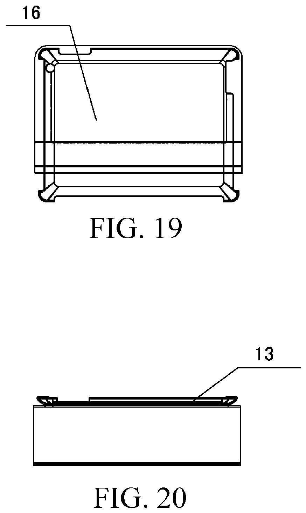

With reference FIG. 1, FIG. 2, FIG. 17, FIG. 18, FIG. 19 and FIG. 20, the present invention mainly includes a case 16, a tablet PC fixing frame 13 and a keyboard, wherein the case 16 is a retractable structure, the tablet PC fixing frame 13 is fixedly installed on one surface of the case for fixing a tablet PC thereon, so as to for the function of fixing, and the keyboard main body is fixedly installed on the other surface of the case 16. In the present embodiment, it can be a retractable structure in the form of pages of a book as a whole, or a half of the tablet PC fixing frame 13 is fixed on the case 16, while the other half thereof is used to for the function of supporting.

In the present embodiment, the keyboard main body includes a decorating part 1, keys/keycaps 2, a light guide film 38, a first double sided adhesive or glue 3, plunger convex dots 4, a second double sided adhesive or glue 5, a fixing film/air hole layer 6, metal domes 7, an air slot layer 8, a conductive film or PCB 9 and a key plate 10, wherein the key plate 10 is disposed at the lowest layer, and is fixedly installed on the case 16, the conductive film or PCB 9 is disposed above the key plate 10, the air slot layer 8 is disposed above the conductive film or PCB 9, more than one metal domes 7 are disposed corresponding to key configurations on the keyboard, one or more metal domes 7 are disposed at each key, the fixing film/air hole layer 6 is disposed above the metal domes 7, for fixing the metal domes 7, the plunger convex dot layer 4, or referred to as the conductive base, is disposed above the fixing film/air hole layer 6, the fixing film/air hole layer 6 is adhered to the plunger convex dot layer 4 via the second double sided adhesive or glue 5, the light guide film 38 is disposed above the plunger convex dot layer 4, the light guide film 38 is adhered to the plunger convex dot layer 4 via the first double sided adhesive or glue 3, a set of light guide dots 41 is disposed on the light guide film 38 corresponding to each key, one or more LED light sources 40 are disposed on the side surface of the light guide film 38, the light guide double sided adhesive or glue 42 is disposed above the light guide film 38, for adhering the light guide film 38 on the keys and keycaps 2, the keys and keycaps 2 are disposed above the light guide film 38, and the decorating part 1 is disposed over the keys and keycaps 2 for the function of decorating. In the present embodiment, threaded holes are respectively disposed at four corners of each layer, and each layer is fixedly installed with each other via screws.

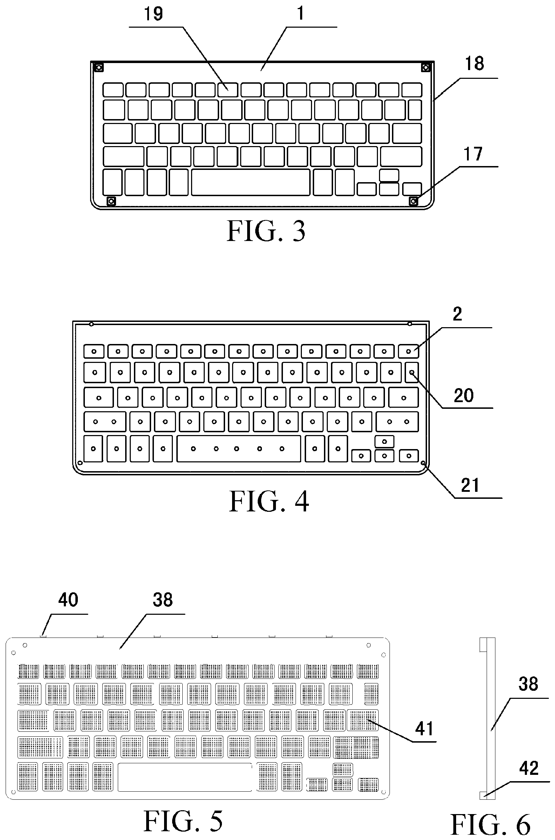

Specific structures among various layers of the present invention are further explained with reference to the accompany drawings as follows:
As combined with the reference to FIG. 3, in the present embodiment, the decorating part layer is mainly the decorating part 1, one decorating part threaded hole 17 is respectively opened at four corners of the decorating part 1, and a decorating part double sided adhesive tape or glue 18 is respectively disposed at the periphery of the decorating part 1. The decorating part 1 is adhered onto the key plate 10 via the decorating part double sided adhesive tape or glue 18, and keycap holes 19 are opened in the decorating part 1 for the keycaps to extend from the keycap holes 19 to the external of the decorating part. In the present embodiment, the decorating part 1 is placed on a surface of the keycaps and keys 2, the keys and keycaps 2 passing through the keycap holes 19 on the decorating part 1, and the decorating part 1 is fixed on the key plate 10 by screwing the screws at the decorating part threaded holes 17. Meanwhile, the periphery thereof is also fixed on the key plate 10 using the decorating part double sided adhesive tape or glue 18. In the present embodiment, the decorating part 1 is made of the type of materials of plastics, metals, paperboard, or cloth, and mainly has the function of decorating, and the thickness of the decorating part 1 is between 0.1-3.0 MM.

As combined with the reference to FIG. 4, in the present embodiment, the conductive substrate convex dots 20 are disposed on the keycaps and keys 2, and one positioning column 21 is respectively disposed at the four corner of the keycap and key layer, for the convenience of accurate positioning during assembly. In the present embodiment, a desired character and pattern is printed on each of the keycaps and keys 2, and one conductive substrate convex dot 20 is disposed on the opposite side of each of the keys and keycaps 2. In the present embodiment, the conductive substrate convex dot 20 is located above the metal dome, for the function of improving hand feelings. In the present embodiment, the material of the keycaps and keys 2 is the type of material of silica gel and plastics, and the entire thickness of the bottom is 0.2-2.5 mm.

As combined with the reference to FIG. 5 and FIG. 6, in the present embodiment, the light guide dots 41 are disposed on the light guide film 38 (also referred to as LGF), the approach for manufacturing the light guide dots 41 is die stamping (concave dots) or printing (convex dots), one or more LED light sources 40 are disposed on the side surface (which may be one, two, three, or four surfaces) of the light guide film 38, and the light guide double sided tape or glue 42 is disposed on the back surface of the light guide film 38, to fix the light guide film 38 on the keys 2 to achieve the aim of emitting light from the keyboard. In the present embodiment, the thickness of the light guide body 38 is between 0.10-0.50 mm. When powering the LED light sources 40, the LED light sources 40 start to emit light. An area light source is formed through transmission of light via the light guide film 38, then refraction of light via the light emitting net points 41, and reflection, so as to illuminate the characters on the keys and keycaps.

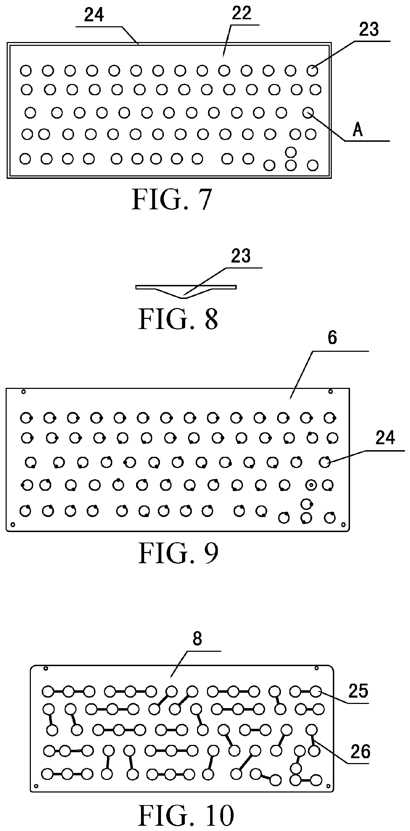

As combined with the reference to FIG. 7 and FIG. 8, in the present embodiment, the conductive substrate layer 4 mainly includes a conductive substrate carrier 22 and plunger 23, the plunger 23, i.e., the conductive base, is disposed above the conductive substrate carrier 22, so that the key is always pressed on a center position of the metal dome 7 during pressing, and a pressing area of the metal dome 7 is reduced at the same time, for the functions of prolonging the life of the key, and improving the hand feelings. The conductive substrate double sided adhesive tape or glue is disposed at the periphery of the conductive substrate carrier 22, to enable the conductive substrate carrier 22 to be fixedly installed on the fixing film/air hole layer 6.

As combined with the reference to FIG. 9, in the present embodiment, the fixing film/air hole layer 6 mainly is a matrix provided with a glue, to fix the metal domes 7 thereon, meanwhile, the metal domes 7 are adhered on the air slot layer 8, the air holes 24 are opened in the matrix, for excluding air generated during pressing the metal domes 7, and meanwhile, the hand feelings for pressing can be improved. The air holes 24 are generally disposed at the position of the edge of the metal domes 7.

As combined with the reference to FIG. 10, in the present embodiment, the air slot layer 8 mainly relates to disposing metal dome holes 25 on the air slot carrier for installing the metal domes 7. More than two neighboring metal dome holes 25 are communicated with each other via the air slot 26, for the function of improving the hand feelings of the keys. In the present embodiment, a glue is provided on the air slot carrier, and the air slot carrier is adhered to the conductive film or PCB plate 9 via the glue.

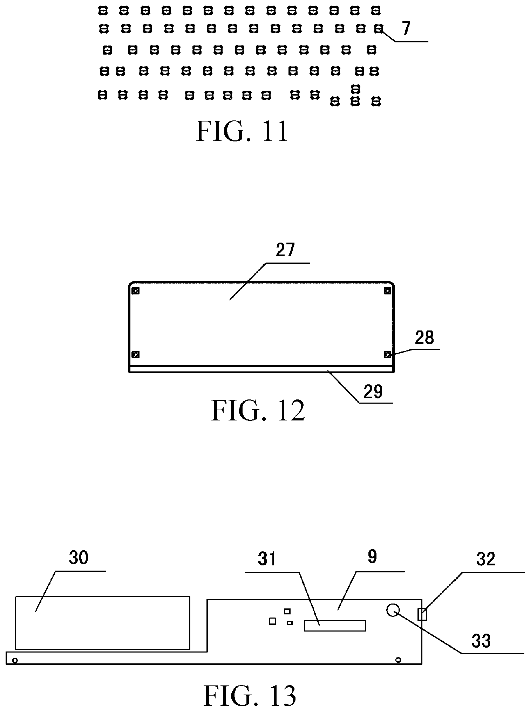

As combined with the reference to FIG. 11, in the present embodiment, a plurality of metal domes 7 are provided, one or more metal domes 7 are disposed below each of the keys and keycaps 2, and the metal domes 7 are adhered to the fixing film 6 via the holes 25 for receiving metal domes on the air slot layer, for the functions of providing mechanical hand feelings as well as breakover when pressing the keys. In the present embodiment, the diameter of the metal domes 7 is 3-15 mm. Metal domes with different sizes are selected according to the keys and keycaps with different sizes. In the present invention, the metal domes are also referred to as a thin film switches, snap domes, dome sheets and the like in the industry.

As combined with the reference to FIG. 12, in the present embodiment, the Bluetooth and battery cap 27 is used to protect the battery and the Bluetooth module, etc. One screw 28 is respectively disposed at four corners of the Bluetooth and battery cap 27. The Bluetooth and battery cap 27 is fixedly installed on key bottom plate 10 via the screws 28. Meanwhile, the cover plate double sided adhesive tape 29 is further disposed at the side edge of the Bluetooth and battery cap 27 for the function of secondarily fixing via the cover plate double sided adhesive tape 29 while the Bluetooth and battery cap 27 is fixedly installed on the key plate 10.

As combined with the reference to FIG. 13, in the present embodiment, an inner structure mainly includes the PCB 9 and the battery 30, a Bluetooth chip 31 and a switch 33 is disposed on the PCB 9, and a USB interface 32 is installed on the side surface of the PCB 9. The Bluetooth chip 31 is used to receive and send signals, and the battery 30 provides the power source for the present invention. When the battery 30 is out, the USB interface 32 can be used as an external power source for supplies, and charging the battery 30. The switch 33 is used to control the switch of the keyboard, the pairing of Bluetooth apparatuses, and the like. In the present embodiment, the PCB 9 can be replaced by the conductive film.

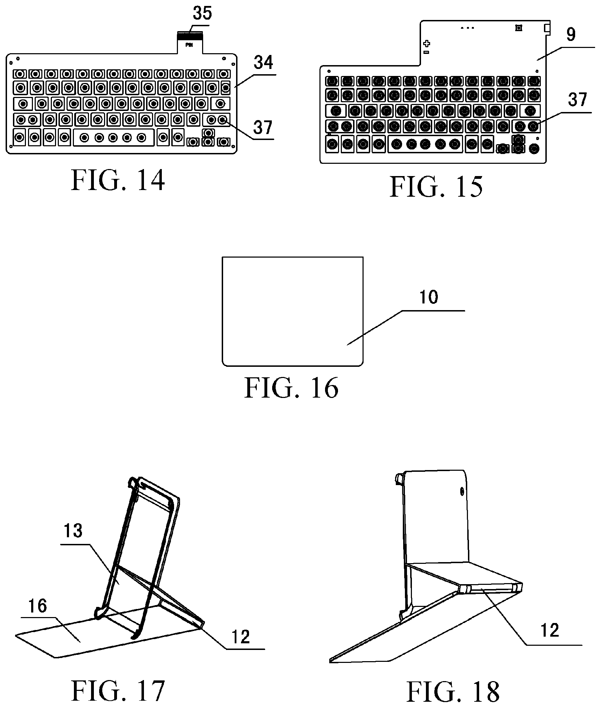

As combined with the reference to FIG. 14, in the present embodiment, in order to use the structure of the conductive film 34, a pin 35 (i.e., PIN) connected to the Bluetooth module is disposed on the conductive film 34, a switch line 36 is designed on the conductive film 34, and the metal dome module is attached to the surface of the conductive film 34. When a metal dome is pressed, the switch line 36 forms an "on and off' state, and achieves the function of the key via the Bluetooth chip 31, to control a terminal apparatus such as a tablet PC.

As combined with the reference to FIG. 15, in the present embodiment, in order to use the structure of PCB 9, the golden finger 37 is disposed on PCB 9, and the metal dome module is attached to the surface of PCB 9. When a metal dome is pressed, the golden finger 37 forms an "on and off' state, and achieves the function of the key via the Bluetooth chip 31, to control a terminal apparatus such as a tablet PC.

As combined with the reference to FIG. 16, in the present embodiment, the key bottom plate 10 functions as supporting the entire keyboard. The key bottom plate 10 is fixedly installed on the case 16. In the present embodiment, the key bottom plate 10 is installed on the case 16 in two ways. One is that the key bottom plate 10 is integrally connected to the fixing frame 13 that fixes the tablet PC in a non-detachable manner, and the rotational function is achieved by the original material of the case 16 to accomplish the opening and combining functions of the case; and the other way is detachable, i.e., the key bottom plate 10 and the tablet PC fixing frame 10 are respectively installed on one side of the case 16, and the opening and combining functions of the case are achieved the rotating shaft 12 between the two sides of the case. Alternative way is included in the present invention.

In the present invention, during manufacturing, metal dome device holes and air slots/holes are first designed on a PET sheet material of 0.03-0.50 mm. In the present embodiment, the PET sheet material is divided into three layers, i.e., a release layer, a glue layer, and a surface material layer. Then another PET sheet material of 0.01-0.50 mm is covered on the PET surface material having the metal dome device holes and air slots/holes by using an automatic roll to roll laminator. Metal domes are then attached to the PET sheet material of 0.01-0.50 mm using a chip mounter. The assembled metal dome module is then assembled on the PCB or conductive film, and the PCB or conductive film requires to be connected to the Bluetooth module, for the function of on/off, and the function of finally control the terminal machine (i.e., the tablet PC). A plunger is then attached on the metal dome module. The main function of plunger is to reduce the influence of the tolerance accumulated during the process of assembly and processing on bad hand feelings generated on the metal dome, and at the same time, plunger also has the function of improving the hand feelings, so that the pressing force is always maintained and applied on a dead center of the metal dome, thereby enabling the mechanic properties of the metal domes to be in the optimal state. LGF (i.e., the light guide film 38) with the thickness of 0.10-0.50 mm is further assembled on the surface of the plunger. The light guide film 38 has a function of transmission of light. Side light emitting LEDs are used to be disposed at the periphery of the product as the light source, so that the entire surface of the keyboard uniformly emits light. The key is then assembled on the metal dome, a desired character, pattern and the like are printed on the key, and then printing ink or oil paint is printed or sprayed on the key, so that the desired font and pattern are formed on the surface of the key. The height of the key is between 0.1-2.0 mm, and materials of different thicknesses are selected according to different structures. The key module is assembled on the metal dome module, and the entire module is packaged inside the case by means of hot-pressing, fitting, suturing and adhering. The case is divided into three parts, one is a key operating part, the total thickness of the key part not being greater than 7 mm; one is a rotating part, which adopts the rotating shaft or leather's own properties; one is a tablet PC installation part; and a complete ultrathin metal dome portable case keyboard is finally assembled.

In the abovementioned embodiments, the Bluetooth keyboard is taken as an example to specifically explain the structure of the present invention. During specific implementations, the keyboard can be connected to the tablet PC and the like via a wired manner, for example, via a data line. The tablet PC referred in the present invention includes a Tablet PC, an Ipad, PAD, a learning machine or an Ultrabook, etc., which are all referred to as a tablet PC in the present invention. In addition to inputting, controlling and operating the various functions of the tablet PC via an external keyboard, the present invention can also protect the tablet PC from being scratched. The present invention is generally applicable to tablet PC external keyboard, ultrabook keyboard, ultrathin keyboard, and learning machine keyboard industries.

The present invention adopts metal domes with a long life, a long stroke, high sensitivity, and a low pressing force as a basis for mechanic actions, so as to generate hand feelings when a hand presses a keycap. The gram force value of the metal dome adopted by the present invention is similar to that of conventional scissor keys, wherein the gram force value is between 30 - 200 gf, the pressing stroke of the keyboard is between 0.10 mm to 1.00 mm, and the sensitivity is between 20% and 85%. The present invention, regarding the light guide material of 0.10-0.50 mm optical level, uses a cold pressing manner to manufacture light emitting spots of micro-nanostructure. By improving the structure, side light emitting LEDs are used as the light source, and through an optical design method, the key surface is enabled to emit light uniformly and softly and high luminance can be obtained. The breakover part of the key of the present invention adopts the PCB or conventional conductive film as a material for connecting electric appliance. The terminal, such as the key and the tablet PC, adopts a Bluetooth output control manner or wired connection manner. The keycap, the PCB or conductive film, the Bluetooth module, the metal domes and the like are then assembled as one module, to be installed inside a protective sheath, so as to form an integrated finished product of "an ultrathin metal dome portable case keyboard." The entire produce of the present invention is light, thin, simple and convenient for installation and detachment, has good hand feelings, is easy to carry, and has the function of protecting while providing an input function for the tablet PC and the like. The ultrathin metal dome portable case keyboard of the present invention would be a great innovation in the keyboard industry, and would bring a revolutionary reform to the conventional keyboard industry.

## Claims

1. A case keyboard wherein the case keyboard comprises a case (16), a tablet PC fixing frame (13) and a keyboard main body; the tablet PC fixing frame (13) is fixedly installed on a surface of the case (16); the keyboard main body is fixedly installed on another surface of the case; the keyboard main body comprises keys or keycaps (2), and a key plate (10); the key plate (10) is disposed at the lowest layer and is fixedly installed on the case (16), **characterized in that** the keyboard main body further comprises a fixing film or an air hole layer (6), metal domes (7), an air slot layer (8), a conductive film or a PCB (9); and **in that** the conductive film or the PCB (9) is disposed above the key plate (10), and the air slot layer (8) is disposed above the conductive film or above the PCB (9); the metal domes (7) are disposed on the conductive film or on the PCB (9), more than one metal dome (7) is disposed corresponding to key configurations on the keyboard, and the fixing film or air hole layer (6) is disposed above the metal domes (7); and the keys or keycaps (2) are disposed above the fixing film or above the air hole layer (6) and **in that** a light guide film (38) is disposed above the fixing film or the air hole layer (6), light guide dots (41) are disposed on the light guide film (38), an LED light source (40) is disposed at a side surface of the light guide film (38), and the keys or keycaps (2) are disposed above the light guide film (38) and **in that** a plunger convex dot layer (4) is disposed above the fixing film or the air hole layer (6), and the light guide film (38) is disposed above the plunger convex dot layer (4).

2. The case keyboard according to claim 1, wherein a decorating part (1) is disposed on the keys or on the keycaps (2), keycap holes (19) are opened in the decorating part (1), and the keys or the keycaps (2) extend from the keycap holes (19) to the outside of the decorating part (1).

3. The case keyboard according to claim 1, wherein the light guide dots (41) are convex dots or concave dots.

4. The case keyboard according to claim 1, wherein the light guide dots (41) on the light guide film (38) are disposed corresponding to the keys or keycaps (2).

5. The case keyboard according to claim 1, wherein the light guide film (38) is adhered to the plunger convex dot layer (4) via a first double sided adhesive or glue (3), and the fixing film or the air hole layer (6) is adhered to the plunger convex dot layer (4) via a second double sided adhesive or glue (5).

6. The case keyboard according to claim 1 or 2, wherein conductive substrate convex dots (20) are disposed on the keycaps or keys (2).

7. The case keyboard according to claim 1 or 2, wherein air holes (24) are opened in the fixing film or in the air hole layer (6).

8. The case keyboard according to claim 7, wherein the air holes (24) are disposed at an edge position of the metal domes (7).

9. The case keyboard according to claim 1 or 2, wherein metal dome holes (25) for mounting the metal domes (7) are disposed on the air slot layer (8), and adjacent two or three metal dome holes (25) are communicated with each other via air slots (26).

10. The case keyboard according to claim 1 or 2, wherein one or more metal domes (7) are disposed below each of the keys or keycaps (2).

## Patentansprüche

1. Tastatur in einem Etui, wobei die Tastatur in einem Etui ein Etui (16), einen Rahmen (13) zur Befestigung eines Tablets-PC und einen Tablet-PC-Hauptkörper umfasst; der Rahmen (13) zur Befestigung eines Tablets-PC starr auf einer Oberfläche des Etuis (16) aufgestellt ist; der Tablet-PC-Hauptkörper starr auf einer anderen Oberfläche des Etuis (16) aufgestellt ist; der Tablet-PC-Hauptkörper Tasten oder Tastenkappen (2), und eine Tastenplatte (10) umfasst; die Tastenplatte (10) auf der niedrigsten Schicht angeordnet ist und starr auf dem Etui (16) aufgestellt ist, **dadurch gekennzeichnet, dass** der Tablet-PC-Hauptkörper weiter eine Befestigungsfolie oder eine Luftlochschicht (6), Metallkuppeln (7), eine Luftschlitzschicht (8), eine leitende Folie oder eine Leiterplatte (9) umfasst; und dadurch, dass die leitende Folie oder die Leiterplatte (9) oben der Tastenplatte (10) angeordnet ist, und die Luftschlitzschicht (8) oben der leitenden Platte oder die Leiterplatte (9) angeordnet ist; die Metallkuppeln (7) auf der leitenden Folie angeordnet oder auf der Leiterplatte (9) angeordnet sind, mehr als eine Metallkuppel (7) der Tastenkonfigurationen entsprechend auf der Tastatur angeordnet ist, und die Befestigungsfolie oder Luftlochschicht (6) oben den Metallkuppeln (7) angeordnet ist; und die Tasten oder Tastenkappen (2) oben der Befestigungsfolie oder oben der Luftlochschicht (6) angeordnet sind und dadurch, dass eine Lichtleiterfolie (38) oben der Befestigungsfolie oder Luftlochschicht (6) angeordnet ist, Lichtleiterpunkte (41) auf der Lichtleiterfolie (38) angeordnet sind, eine LED-Lichtquelle (40) auf einer Seitenoberfläche der Lichtleiterfolie (38) angeordnet ist, und die Tasten oder Tastenkappen oben der Lichtleiterfolie (38) angeordnet sind und dadurch, dass eine Schicht mit konvexen Plungerpunkten (4) oben der Befestigungsfolie oder Luftlochschicht (6) angeordnet ist, und die Lichtleiterfolie (38) oben der Schicht mit konvexen Plungerpunkten (4) angeordnet ist.

2. Tastatur in einem Etui nach Anspruch 1, wobei ein verzierendes Teil (1) auf den Tasten oder Tastenkappen (2) angeordnet ist, Tastenkappenlöcher (19) in dem verzierenden Teil (1) geöffnet sind und die Tasten oder die Tastenkappen sich von den Tastenkappenlöchern (19) bis zu der Außenseite des verzierenden Teils (1) ausstrecken.

3. Tastatur in einem Etui nach Anspruch 1, wobei die Lichtleiterpunkte (41) konvexe Punkte oder konkave Punkte sind.

4. Tastatur in einem Etui nach Anspruch 1, wobei die Lichterleiterpunkte (41) den Tasten oder Tastenkappen (2) entsprechend auf der Lichtleiterfolie (38) angeordnet sind.

5. Tastatur in einem Etui nach Anspruch 1, wobei die Lichtleiterfolie (38) über einen ersten doppelseitigen Kleber oder Klebstoff (3) an der Schicht mit konvexen Plungerpunkten (4) klebt, und die Befestigungsfolie oder die Luftlochschicht (6) über einen zweiten doppelseitigen Kleber oder Klebstoff (5) an der Schicht mit konvexen Plungerpunkten (4) klebt.

6. Tastatur in einem Etui nach Anspruch 1 oder 2, wobei leitende konvexe Punkte (20), die ein leitendes Substrat bilden, auf den Tastenkappen oder Tasten (2) angeordnet sind.

7. Tastatur in einem Etui nach Anspruch 1 oder 2, wobei Luftlöcher (24) in der Befestigungsfolie oder in der Luftlochschicht (6) geöffnet sind.

8. Tastatur in einem Etui nach Anspruch 7, wobei die Luftlöcher (24) an einer Randstellung der Metallkuppeln (7) angeordnet sind.

9. Tastatur in einem Etui nach Anspruch 1 oder 2, wobei Metallkuppellöcher (25) zur Montage der Metallkuppeln (7) auf der Luftschlitzschicht (8) angeordnet sind, und zwei oder drei aneinandergrenzende Metallkuppellöcher (25) über Luftschlitze (26) miteinander in Verbindung stehen.

10. Tastatur in einem Etui nach Anspruch 1 oder 2, wobei eine oder mehrere Metallkuppeln (7) unter jeder der Tasten oder Tastenkappen (2) angeordnet ist.

## Revendications

1. Clavier à étui dans lequel le clavier à étui comprend un étui (16), un cadre de fixation (13) pour tablette électronique et un corps principal de clavier; le cadre de fixation (13) pour tablette électronique est installé de façon fixe sur une surface de l'étui (16); le corps principal de clavier est installé de façon fixe sur une autre surface de l'étui (16); le corps principal de clavier comprend des touches ou des capuchons (2), et une plaque à touches (10); la plaque à touches (10) est disposée en la position la plus basse et est installée de façon fixe sur l'étui (16), **caractérisé en ce que** le corps principal de clavier comprend en outre un film de fixation ou une couche à trous d'air (6), des dômes métalliques (7), une couche à fentes d'air (8), un film conducteur ou une carte mère (9); et **en ce que** le film conducteur ou la carte mère (9) est disposé(e) au-dessus de la plaque à touches (10), et la couche à fentes d'air (8) est disposée au-dessus du film conducteur ou au-dessus de la carte mère (9); les dômes métalliques (7) sont disposés sur le film conducteur ou sur la carte mère (9), plus d'un dôme métallique (7) est disposé en correspondance avec la configuration des touches sur le clavier, et le film de fixation ou la couche à trous d'air (6) est disposé(e) au-dessus des dômes métalliques (7); et les touches ou capuchons (2) sont disposés au-dessus du film de fixation ou au-dessus de la couche à trous d'air (6) et **en ce qu'**un film formant guide optique (38) est disposé au-dessus du film de fixation ou de la couche à trous d'air (6), des points de guide optique (41) sont disposés sur le film formant guide optique (38), une source de lumière LED (40) est disposée en une surface latérale du le film formant guide optique (38), et les touches ou capuchons sont disposés au-dessus du film formant guide optique (38) et **en ce qu'**une couche de points convexes de poussoir (4) est disposée au-dessus du film de fixation ou de la couche à trous d'air (6), et le film formant guide optique (38) est disposé au-dessus de la couche de points convexes de poussoir (4).

2. Clavier à étui selon la revendication 1, dans lequel une pièce décorative (1) est disposée sur les touches ou sur les capuchons (2), des orifices de capuchon (19) sont ouverts dans la pièce décorative (1), et les touches ou les capuchons (2) s'étendent depuis les orifices de capuchon (19) jusqu'à l'extérieur de la pièce décorative (1).

3. Clavier à étui selon la revendication 1, dans lequel les points de guide optique (41) sont des points convexes ou des points concaves.

4. Clavier à étui selon la revendication 1, dans lequel les points de guide optique (41) sur le film formant guide optique (38) sont disposés en correspondance avec les touches ou les capuchons (2).

5. Clavier à étui selon la revendication 1, dans lequel le film formant guide optique (38) adhère à la couche de points convexes de poussoir (4) par l'intermédiaire d'un(e) adhésif double face ou colle (3), et le film de fixation ou la couche à trous d'air adhère à la couche de points convexes de poussoir (4) par l'intermédiaire d'un(e) deuxième adhésif double face ou colle (5).

6. Clavier à étui selon la revendication 1 ou 2, dans lequel des points convexes formant substrat conducteur (20) sont disposés sur les touches ou capuchons (2).

7. Clavier à étui selon la revendication 1 ou 2, dans lequel des trous d'air (24) sont ouverts dans le film de fixation ou dans la couche de trous d'air (6).

8. Clavier à étui selon la revendication 7, dans lequel les trous d'air (24) sont disposés en une position de bord des dômes métalliques (7).

9. Clavier à étui selon la revendication 1 ou 2, dans lequel des trous de dômes métalliques (25) aptes au montage des dômes métalliques (7) sont disposés sur la couche à fentes d'air (8), et deux ou trois trous de dômes métalliques (25) sont en communication les uns avec les autres par l'intermédiaire de fentes d'air (26).

10. Clavier à étui selon la revendication 1 ou 2, dans lequel un ou plusieurs dômes métalliques (7) sont disposés au-dessous de chacune des touches ou capuchons (2).
